# EUROPEAN PATENT SPECIFICATION

(11) **EP 3 947 559 B1**
(45) Date of publication and mention of the grant of the patent: **31.12.2025**
(21) Application number: 20777395.3
(22) Date of filing: 24.03.2020
(51) Int. Cl.: C08L 51/00, C08F 285/00, C08L 33/00

(54) **HIGHLY EFFICIENT IMPACT MODIFIER AND POLYMERIC COMPOSITIONS**
HOCHEFFIZIENTER SCHLAGZÄHMODIFIZIERER UND POLYMERZUSAMMENSETZUNGEN
ANTICHOC HAUTE EFFICACITÉ ET COMPOSITIONS POLYMÈRES

(30) Priority: 25.03.2019 US 201962823060 P; 27.02.2020 US 202062982135 P
(43) Date of publication of application: 09.02.2022
(73) Proprietor: Trinseo Europe GmbH, 8808 Pfäffikon (CH)
(72) Inventor: MACY, Noah E., Royersford, Pennsylvania 19468 (US); WANG, Jing-Han, King of Prussia, Pennsylvania 19406 (US); BARSOTTI, Robert J., Newtown Square, Pennsylvania 19073 (US)
(74) Representative: SSM Sandmair
(86) International application number: PCT/US2020/024367
(87) International publication number: WO 2020/198179

(56) References cited:
- EP-A1- 0 636 652
- WO-A1-2014/154543
- WO-A1-2016/102682
- US-A- 5 312 575
- US-A1- 2003 008 945
- US-A1- 2003 216 510
- US-A1- 2009 309 260

## Description

### FIELD OF THE INVENTION

The invention relates to a core shell particle, a polymeric impact modified composition and an article comprising the impact modified composition. Disclosed is a core-shell impact modifier composition - in particular those with a high T_{g} core, a low T_{g} inner shell and a high T_{g} outer shell, synthesized in such a way to have a unique concentric morphology and/or a combination of high rubber loading and low particle size and/or require only a low surfactant level. The incorporation of these impact modifiers into polymeric compositions allows for a novel combination of properties: a combination of high impact while retaining high gloss or a combination of high impact while retaining low haze in the presence of water at elevated temperatures. These impact modifiers also allow excellent efficiency in their use- allowing for excellent impact to be achieved at low loadings.

### BACKGROUND OF THE INVENTION

Polymeric articles are often required to have a combination of properties such as excellent resistant to impact, excellent aesthetics - such as transparency or high gloss for opaque articles, and strong resistance to hazing even in high temperature, high humidity environments (commonly referred to as "low water haze"). For many polymeric materials, it is well established in industry to use low glass transition temperature (T_{g}) rubbery particles to enhance impact performance of the polymeric composition. In particular, the use of spherical multi-layer polymeric particles consisting of a core or an inner shell of rubbery low T_{g} polymers and an outer shell of a high T_{g} polymer that is compatible with the host matrix - so called "core-shell" impact modifiers - has been utilized for several decades for toughening of polymers such as PVC, PLA, PC, acrylics, epoxies and polyesters. (US3843753, USUS3661994) For certain acrylic polymers such as polymethylmethacrylate (PMMA) it has been demonstrated that the use of a high T_{g} core, a low T_{g} rubbery inner shell and a high T_{g} outer shell is advantageous for achieving the optimal level of impact performance (US443103, US4521568, US5270397).

Unfortunately the use of core-shell impact modified particles in polymeric compositions, while improving impact performance, has limitations to the extent that a brittle polymer matrix such as PMMA can be toughened. In US7294399B2 it was shown that significantly improved impact can be achieved in an acrylic formulation by adding lower T_{g} alkyl acrylate comonomer to the matrix along with using a high rubber loading in the core. However, the use of the alkyl acrylate copolymer in the matrix is detrimental to thermal properties of the composition such as Heat Distortion Temperature (HDT).

Also, unfortunately, it has also been demonstrated that the use of core-shell impact modified particles in polymeric compositions, while again improving impact performance, can be detrimental to properties such as gloss, temperature haze (haze realized in a transparent article when temperature is increased above ambient) and water haze resistance. In US2017/0298217 A1 and WO2014/54543, the use of small particle size was shown to improve resistance to water haze, but impact property improvements were modest and no improvements were demonstrated in water haze resistance.

It is very desirable for one to develop a core-shell impact modifier that allow for excellent impact properties in brittle matrices such as PMMA while still maintaining very good aesthetics (high transparency or gloss), low temperature haze and high resistance to water haze. Likewise, it is desirable to develop a highly efficient impact modifier that can be used at low loadings but still provide excellent improvements in impact performance.

Surprisingly it has been found that by developing core-shell impact modifier particles with small particle size and high rubber, excellent impact performance can be achieved while maintaining excellent aesthetics. It has also been found that by developing core-shell particles that are highly concentric, impact properties are improved - in particular for small particle sizes. Finally, it was found that by limiting use of surfactant in the synthesis of impact modifier particles- in particular for small particle sizes- excellent impact can be achieved while maintaining low water haze. By combining all three attributes into one particle, a highly efficient core-shell modifier is achieved for polymeric compositions. These compositions are expected to have strong value in applications in automotive, building and construction, lighting, optical, electronic, transportation, electrical, sign & display, home appliance, consumer good, coatings, medical, cosmetics, UV personal care, packaging and additive manufacturing applications.

WO 2014/154543 A1 discloses an impact-resistant molding composition, in particular impact-resistant PMMA with improved optical properties at elevated temperatures, molded articles obtainable therefrom, and the use of the molding composition and the molded articles.

EP 0 636 652 A1 discloses a thermoplastic molding composition made from a copolymer based on alkyl esters of methacrylic acid and a five-stage emulsion graft copolymer.

US 2003/0216510 A1 discloses an improved weatherable thermoplastic composition. The composition is comprised of a copolymer of an alkyl acrylate or alkyl methacrylate and poly(methyl)methacrylate and a multi-stage, sequentially-polymerized impact modifier polymer. The copolymer is characterized by greater than 15 weight percent alkyl acrylate content. The multi-stage, sequentially-polymerized impact modifier is characterized by an elastomer stage, which is 55 percent by weight or greater of the impact modifier composition and is minimally crosslinked. The thermoplastic composition can be used in a wide range of film, sheet, or molded applications.

### SUMMARY OF THE INVENTION

The invention is set out in the appended independent claims. The dependent claims describe advantageous embodiments.

### DETAILED DESCRIPTION OF THE INVENTION

The invention relates to a core-shell particle, a polymeric impact modified composition and an article comprising the impact modified composition.

All percentages used herein are weight percentages and all molecular weights are weight average molecular weights determined by gel permeation unless stated otherwise.

The invention will be generally described, and will also include a core-shell /acrylic polymer system as a model system. One of ordinary skill in the art will recognize, based on the following description and examples, that other polymeric matrices may be used with comparable results.

### COMPOSITION

### Core-Shell Impact Modifier

The impact modifier of the invention is a multi-stage, sequentially-produced polymer having a core-shell particle structure. The core-shell impact modifier comprises at least three layers (hard core/inner elastomeric shell layer/outer hard shell layer, known as a "hard core, core-shell particle") or any higher number of layers, such as a soft seed core surrounded by a hard core/an elastomeric intermediate shell layer/a second different elastomeric layer/ and one or more high Tg outer shell layers. Other similar structures of multiple layers are known in the art.

In one preferred embodiment, the presence of a hard core layer provides a desirable balance of good impact strength, high modulus, and excellent UV resistance, not achieved with a core/shell modifier that possesses a soft-core layer. Core layer is defined here as a polymeric layer that has at least two polymeric layers on its outside. It need not be the innermost layer of the particle. The hard core layer (T_{g} > 0°C, preferably T_{g} > 20 °C) is typically a single composition polymer, but can also include the combination of a small amount of a low T_{g} seed on which the hard core layer is formed. For example, a small 5% rubber core seed that becomes dispersed into a hard inner layer would be included in the invention as a hard core layer, as long as the combination behaves as a hard core high T_{g} layer. The hard core layer can be chosen from any monomer combination meeting the T_{g} requirements. Preferably, the hard core layer is composed primarily of methacrylate ester units, acrylate ester units, styrenic units, or a mixture thereof. Methacrylate esters units include, but are not limited to, methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate and 2-methoxyethyl methacrylate. Acrylate ester units include, but are not limited to, methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cycloheyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate and 2-methoxyethyl acrylate. Preferably the acrylate ester units are chosen from methyl acrylate, ethyl acrylate, n-butyl acrylate, 2-ethylhexyl acrylate and octyl acrylate. Styrenics units include styrene, and derivatives thereof such as, but not limited to, alpha-methyl styrene, and para methyl styrene. In one embodiment the hard core layer is all-acrylic. In another embodiment the hard core layer is acrylic with <30% styrenic monomer units.

At least one intermediate inner shell layer or layers are elastomeric, having a T_{g} of less than 0 °C, and preferably less than -20°C. Preferred elastomers include polymers and copolymers of alkyl acrylates, dienes, styrenics, and mixtures thereof. Preferably the soft intermediate layer is composed mainly of acrylate ester units. Acrylate ester units useful in forming the soft block include, but are not limited to, methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cycloheyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate and 2-methoxyethyl acrylate. Preferably the acrylate ester units are chosen from methyl acrylate, ethyl acrylate, n-butyl acrylate, 2-ethylhexyl acrylate and octyl acrylate. Useful dienes include, but are not limited to isoprene and butadiene. Useful styrenics include, but are not limited to alpha-methyl styrene, and para-methyl styrene. In a preferred embodiment, acrylate ester units comprise >75% of the elastomeric inner shell layer or layers. Preferably the total amount of elastomeric layer(s) in the impact modifier is from 30-90 weight percent, more preferably from 40-85 weight percent, and most preferably from 55-80 weight percent, based on the total weight of the impact modifier particle.

The outer hard shell layer can be made of one or more shell layers, having a T_{g} > 0 °C, more preferably T_{g} > 20 °C, preferably selected from the list above for the hard core. The outer shell layer may be the same or different composition from the hard core layer. A level of functionalization may be included in the shell, to aid in compatibility with the polymer matrix as described in US7195820B2. Hydrophilic monomers may also be included in the shell to improve shell coverage or improve anti-blocking properties. Example of useful hydrophilic monomers include but are not limited to hydroxy alkyl (meth)acrylates, (meth)acrylic acid, (meth)acrylic amides, (meth)acrylic amines, polymerizable surfactants and macromonomers containing hydrophilic moieties.

In one aspect of the invention the core-shell polymer is a three stage composition wherein the stages are present in ranges of 0.5 to 5 weight percent, of the first stage hard core layer; 10 to 80 weight percent, preferably 55 to 80 weight percent, of the second elastomeric inner shell stage; and 5 to 50 percent, preferably 10 to 20, of the outer shell stage, all percentages based on the total weight of the three-stage polymer particle. The core-shell polymer particle will have a radius of 100 nm or less. The small particle size is advantageous to maintaining excellent aesthetic properties such as transparency or high gloss when the core-shell particle is added to polymeric compositions.

In another aspect of the invention the core-shell polymer is synthesized in a manner to produce a concentric circular particle- one that resembles a perfect bullseye. This concentricity and circularity is found to be advantageous to maximize impact performance when utilized in a polymeric composition.

The core-shell polymer can be produced by any known technique for preparing multiple-stage, sequentially-produced polymers, for example, by emulsion polymerizing a subsequent stage mixture of monomers in the presence of a previously formed polymeric product. In this specification, the term "sequentially emulsion polymerized" or "sequentially emulsion produced" refers to polymers which are prepared in aqueous dispersion or emulsion and in which successive monomer charges are polymerized onto or in the presence of a preformed latex prepared by the polymerization of a prior monomer charge and stage. In this type of polymerization, the succeeding stage is attached to and intimately associated with the preceding stage.

In a preferred embodiment the impact modifier is made by sequentially emulsion polymerization. As is known in the art, in this type of polymerization, emulsifying agents are commonly used to allow for both the stabilization/ transport of the monomer feeds to the growing core-shell particle and for the stabilization of core-shell particle itself in the aqueous medium. Emulsifying agents are defined as any organic or inorganic molecule that has both a hydrophobic and hydrophilic component in its structure. Use may be made, as emulsifying agent, of any one of the known surface-active agents, whether anionic, nonionic or even cationic. In particular, the emulsifying agent may be chosen from anionic emulsifying agents, such as sodium or potassium salts of fatty acids, in particular sodium laurate, sodium stearate, sodium palmitate, sodium oleate, mixed sulphates of sodium or of potassium and of fatty alcohols, in particular sodium lauryl, sulphate, sodium or potassium salts of sulphosuccinic esters, sodium or potassium salts of alkylarylsulphonic acids, in particular sodium dodecylbenzene sulphonate, and sodium or potassium salts of fatty monoglyceride monosulphonates, or alternatively from nonionic surfactants, such as the reaction products of ethylene oxide and of alkylphenol or of aliphatic alcohols, alkylphenols. Use may also be made of mixtures of such surface-active agents, if need be.

In a more preferred embodiment the emulsion synthesis of this particle is performed in a way that the ratio of the weight of the emulsifying agent to surface area of the core-shell particle is less than 1.5x10⁻⁴ g/m² and preferably less than 9x10⁻⁵ g/m². This ratio is the ratio present in the emulsion or after a recovery process when no specific steps have been utilized to remove emulsifying agents. Steps to remove emulsifying agents include but are not limited to latex coagulation, dialysis of latex, or washing of already isolated particles; these methods can often improve the water haze performance beyond what is claimed in this invention, but introduces additional manufacturing steps and adds cost. Spray drying is a manner known in the art to efficiently recover core-shell particles at low without extra costly steps to remove emulsifying agents. Having low emulsifying agent level in particles recovered by spray drying is advantageous for maintaining lower water haze when the core-shell particle is utilized in polymeric compositions.

In one aspect of the invention, where the impact modifier is made by sequential emulsion polymerization, the aqueous reaction mixture obtained on conclusion of the final emulsion polymerization stage, which is composed, of an aqueous emulsion of the polymer according to the invention, is then treated in order to recover the said polymer therefrom- in many cases in powder form. Spray drying a particularly preferred technique. An effective, but more costly technique is coagulation, where the emulsion is subjected, according to the emulsifying agent used, to a coagulating treatment by bringing into contact with a saline solution (CaCl₂ or AlCl₃) or a solution acidified with concentrated sulfuric acid and then to separate, by filtration, the solid product resulting from the coagulating, the said solid product then being washed and dried to give a graft copolymer as a powder. It is also possible to recover the polymer contained in the emulsion by using drum drying, freeze-drying or other means known in the art. During any of these process, additives such as talc, calcium carbonate or silica may be used to aid in processing the powder. Hard particles may be used in conjunction with the core-shell particles of the invention to further improve anti-blocking and processing properties.

The impact modifier particle of the invention may be intimately combined with polymeric, organic or inorganic dispersing aids, anti-caking and/or other process aids or other impact modifiers as is commonly practiced by industry during spray drying or coagulation recovery processes. This process forms an impact modifier composite particle- where the core-shell impact modifier particle is intimately combined with the polymer, organic or inorganic additive or process aid. The core-shell impact modifier composite particles may be produced and subsequently recovered into powder form by means known in the art, including but not limited to cospray-drying as separate streams into a spray-dryer; blending of the core-shell particles and process aids as a dispersion, and spray-drying the mixture; co-coagulation; co-freeze-drying; applying a dispersion or solution of the process aids onto the core-shell powder, followed by drying; physical blending of the impact modifier and process aid powders - which increases homogeneity in the powder form and leads to a more homogeneous blend into the matrix in a melt-blending; and physical blending followed by a weak melt blending of the impact modifier and process aid powders allowing for softening and adhesion of the particles without a full melt.

The impact modifier particles are present in the final impact-modified polymeric composition at a level of from 5 to 80 weight percent, preferably 10 to 60 weight percent, and more preferably from 20 to 50 weight percent, based on the overall composition.

### Polymeric Composition

The resin used as the matrix polymer in the compositions of the invention can be any thermoplastic or thermoset. Particularly preferred thermoplastics include, but are not limited to acrylic polymers, styrenic polymers, polyolefins, polyethylene terephthalate (PET), polybutylene terephthalate (PBT), polyvinyl chloride (PVC), polycarbonate (PC), thermoplastic polyurethane (PU), polylactic acid (PLA), thermoplastic fluoropolymers, polyamides or mixtures thereof. Particularly preferred thermoset polymers include but are not limited to epoxies, unsaturated polyester resins, vinyl ester resin, thermoset polyurethanes, urea formaldehydes, melamine formaldehydes, UV-curable and thermoset acrylics.

Styrenic polymers, as used herein, include but are not limited to, polystyrene, high-impact polystyrene (HIPS), acrylonitrile-butadiene-styrene (ABS) copolymers, acrylonitrile-styrene-acrylate (ASA) copolymers, styrene acrylonitrile (SAN) copolymers, methacrylate-acrylonitrile-butadiene-styrene (MABS) copolymers, styrene-butadiene copolymers (SB), styrene-butadiene-styrene block (SBS) copolymers and their partially or fully hydrogenenated derivatives, styrene-isoprene copolymers styrene-isoprene-styrene (SIS) block copolymers and their partially or fully hydrogenenated derivatives, styrene-(meth)acrylate copolymers such as styrene-methyl methacrylate copolymers (S/MMA), and mixtures thereof. A preferred styrenic polymer is ASA.

Acrylic polymers, as used herein, include but are not limited to, homopolymers, copolymers and terpolymers comprising alkyl methacrylates. The alkyl methacrylate monomer is preferably methyl methacrylate, which may make up from 51 to 100 of the monomer mixture, preferably greater than 60 weight percent, more preferably greater than 75 weight percent, and most preferably greater than 85 weight percent. The remaining monomers used to form the polymer are chosen from other acrylate, methacrylate, and/or other vinyl monomers. Other methacrylate, acrylate, and vinyl monomers useful in the monomer mixture include, but are not limited to methyl acrylate, ethyl acrylate and ethyl methacrylate, butyl acrylate and butyl methacrylate, iso-octyl methacrylate and acrylate, lauryl acrylate and lauryl methacrylate, stearyl acrylate and stearyl methacrylate, isobornyl acrylate and methacrylate, methoxy-ethyl acrylate and methacrylate, 2-ethoxy ethyl acrylate and methacrylate, dimethylamino ethyl acrylate and methacrylate monomers, styrene and its derivatives. Alkyl (meth) acrylic acids such as (meth)acrylic acid and acrylic acid can be useful for the monomer mixture. Small levels of multifunctional monomers as crosslinking agents may also be used. A preferred acrylic polymer is a copolymer of methyl methacrylate and 2 - 16 percent of one or more C1-4 acrylates.

The thermoplastic or thermoset polymers of the invention can be manufactured by any means known in the art, including emulsion polymerization, bulk polymerization, solution polymerization, and suspension polymerization. In one embodiment, the polymer matrix has a weight average molecular weight of between 50,000 and 5,000,000 g/mol, and preferably from 75,000 and 150,000 g/mol, as measured by gel permeation chromatography (GPC). The molecular weight distribution of the polymer matrix may be monomodal, or multimodal with a polydispersity index greater than 1.5.

In one embodiment the composition of the polymer matrix and core-shell particle are chosen such that the refractive index are within 0.008 units, preferably within 0.005 units and more preferably within 0.001 units- allowing for a transparent formulation.

In another embodiment, dyes or pigments are added to the composition to allow for a translucent or opaque material. The level of pigment or dye in the composition is preferably from 0.2 to 25 weight percent, preferably 0.5 to 20 weight percent, and most preferably from 1 to 5 weight percent, based on the total composition. The addition of the dye or pigment can produce a clear article (having a haze level of less than 10 percent, and preferably less than 3 percent; a translucent article having a haze level of from 10 to 35 percent, preferably from 15 to 25 percent; or an opaque article.

Useful dyes and pigments of the invention include, but are not limited to: Nano Carbon materials such as graphite or carbon nanotubes, cadmium zinc sulphide, CI Pigment Yellow 35, (CAS Reg. No. 8048-07-5, Reach No. 01-2119981639-18-0001), Cadmium sulphoselenide orange, CI Pigment Orange 20, (CAS Reg. No. 12656-57-4, Reach No. 01-2119981636-24-0001), Cadmium sulphoselenide red (CI Pigment Red 108, CAS Reg. No. 58339-34-7, Reach No. 01-2119981636-24-0001), Carbon Black (PBlk-7), TiO₂ (PW-6), BaSO₄ (PW-21 and PW-22), CaCO₃ (PW-18), PbCO₃, Pb(OH)₂, (PW1), MACROLEX^{®} Yellow 6G,MACROLEX^{®} Yellow 3G, MACROLEX^{®} Yellow G,MACROLEX^{®} Yellow E2R, MACROLEX^{®} Yellow RN, MACROLEX^{®} Orange 3G, MACROLEX^{®} OrangeR, MACROLEX^{®} Red E2G, MACROLEX^{®} Red A MACROLEX^{®} Red EG, MACROLEX^{®} Red G, MACROLEX^{®} Red H, MACROLEX^{®} RedB, MACROLEX^{®} Red 5B, MACROLEX^{®} Red Violet, MACROLEX^{®}Violet 3R, MACROLEX^{®} Violet B, MACROLEX^{®} Violet 3B, MACROLEX^{®} Blue 3R, MACROLEX^{®} Blue RR, MACROLEX^{®} Blue 2B, MACROLEX^{®} Green 5B, MACROLEX^{®} Green G, MACROLEX^{®} FluorescentYel., and MACROLEX^{®}.

### Other Additives:

The composition may optionally contain one or more typical additives for polymer compositions used in usual effective amounts, including but not limited to other impact modifiers (both core-shell and linear block copolymers), stabilizers, plasticizers, fillers, additives to improve scratch and/or mar resistance, coloring agents, pigments, antioxidants, antistatic agents, surfactants, toner, refractive index matching additives, additives with specific light diffraction, light absorbing, or light reflection characteristics, dispersing aids, radiation stabilizers such as poly(ethylene glycol), poly(propylene glycol), butyl lactate, and carboxylic acids such as lactic acid, oxalic acid, and acetic acid, light modification additives, such as polymeric or inorganic spherical particles with a particle size between 0.5 microns and 1,000 microns. The amount of additives included in the polymer composition may vary from about 0% to about 70% of the combined weight of polymer, inorganic mineral oxide, and additives. Generally amounts from about 0.5% to about 45%, preferably from about 5% to about 40%, are included. The additives can be added into the composition prior to being added to the extruder, or may be added into the molten composition part way through the extruder.

### PROCESSING

### Process of Synthesizing the Core-Shell Composite Impact Modifier

The core/shell polymer of the invention is preferably synthesized by emulsion free-radical polymerization. A general procedure for producing a 4 stage core-shell polymer particle will be described. One skilled in the art will be able to modify this procedure to form other core-shell particles useful as impact modifiers.

In a first stage (hard core layer), an emulsion is prepared which contains, per part by weight of monomers to be polymerized, 1 to 10 parts of water, 0.001 to 0.03 parts of an emulsifying agent, a portion of (meth)acrylate monomer mixture and at least one polyfunctional crosslinking agent. The reaction mixture thus formed is stirred and maintained at a temperature ranging from 45oC to 85oC and preferably at a temperature in the region of 60-80°C. 0.0001 to 0.005 parts of a catalyst which generates free radicals is then added along with equal parts of an activator compound that increases radical flux and the reaction mixture thus formed is maintained at a temperature of, for example, between ambient temperature and 100°C, and with stirring for a period sufficient to obtain virtually complete conversion of the monomers. Further additions of alkyl acrylate monomer(s) and the grafting agent, as well as, at the same time, 0.0001 to 0.005 part of a catalyst which generates free radicals, are then added simultaneously to the phase thus obtained, until the target particle size is reached.

In a second stage, the said core is grafted with a choice of monomers that will form a polymer with a Tg < 0°C (inner shell). To do this, an appropriate amount of the said monomer mixture is added to the reaction mixture resulting from the first stage, in order to obtain a grafted copolymer containing the desired content of grafted chains, as well as, if appropriate, additional amounts of emulsifying agent and of a radical catalyst also within the ranges defined above, and the mixture thus formed is maintained at a temperature greater than the abovementioned range, with stirring, until virtually complete conversion of the grafting monomers is obtained. As described above, use may be made, as emulsifying agent, of any one of the known surface-active agents, whether anionic, nonionic or even cationic. In particular, the emulsifying agent may be chosen from anionic emulsifying agents, such as sodium or potassium salts of fatty acids, in particular sodium laurate, sodium stearate, sodium palmitate, sodium oleate, mixed sulphates of sodium or of potassium and of fatty alcohols, in particular sodium lauryl sulphate, sodium or potassium salts of sulphosuccinic esters, sodium or potassium salts of alkylarylsulphonic acids, in particular sodium dodecylbenzenesulphonate, and Sodium or potassium salts of fatty monoglyceride monosulphonates,or alternatively from nonionic surfactants, such as the reaction products of ethylene oxide and of alkylphenol or of aliphatic alcohols, alkylphenols. Use may also be made of mixtures of such surface-active agents, if need be. In one embodiment, the emulsion may be made in a semi-continuous process, preferably at reaction temperatures of from 60-90°C., and preferably from 75°C to 85°C.

In a third stage, the said elastomer shell is grafted with a choice of monomers that will form a polymer with a Tg > 0°C (outer shell). To do this, an appropriate amount of the said monomer mixture is added to the reaction mixture resulting from the second stage, in order to obtain a grafted copolymer containing the desired content of grafted chains, as well as, if appropriate, additional amounts of emulsifying agent and of a radical catalyst also within the ranges defined above, and the mixture thus formed is maintained at a temperature within the range for stage 2, with stirring, until virtually complete conversion of the grafting monomers is obtained. As described above, use may be made, as emulsifying agent, of any one of the known surface-active agents, whether anionic, nonionic or even cationic. In one embodiment, the emulsion may be made in a semi-continuous process, preferably at reaction temperatures of from 60-90° C, and preferably from 75°C to 85°C.

In a fourth stage, the process from the third stage is repeated such that the shell thickness will be increased and the resulting latex can be isolated into a powder by spray drying.

In general, preferred catalysts capable of being employed in all stages are compounds which give rise to free radicals under the temperature conditions chosen for the polymerization. These compounds can in particular be peroxide compounds, such as hydrogen peroxide, alkali metal persulfates and in particular sodium or potassium persulfate, ammonium persulfate; percarbonates, peracetates, perborates, peroxides such as benzoyl peroxide or lauroyl peroxide, or hydroperoxides Such as cumene hydroperoxide, diisopropylbenzene hydroperoxide, para-menthane hydroperoxide, tert-amyl or tert-butyl hydroperoxide. However, it is preferable to use, in the core stage, catalytic systems of redox type formed by the combination of a non-ionic peroxide compound, for example t-butyl hydroperoxide as mentioned above, with a reducing agent, in particular such as alkali metal sulfite, alkali metal bisulfite, sodium formaldehyde sulfoxylate (NaHSO.Sub.2.HCHO), ascorbic acid, glucose, and in particular those of the said catalytic systems which are water soluble, for example t-butyl hydroperoxide/bruggolite ff7, or diisopropylbenzene hydroperoxide/sodium formaldehyde sulfoxylate. It is also possible to add, to the polymerization mixture of one and/or other of the stages, chain-limiting compounds, and in particular mercaptans such as dodecyl mercaptan, isobutyl mercaptan, octyl mercaptan, dimercapto dioxaoctane, or isooctyl mercaptopropionate, for the purpose of controlling the molecular mass of the core and/or of the chains grafted onto the nucleus, or alternatively compounds such as phosphates, for the purpose of controlling the ionic strength of the polymerization mixture.

### Process of Incorporating Core-Shell Particle of Core-Shell Composite Particle into Polymer Composition

The polymeric matrix and core-shell particle or core-shell composite particle can be combined in several different ways, to provide a well-dispersed impact modifier in the composition. A preferred process for thermoplastic matrices involves a melt-processing step. A particularly preferred method is the mixing of the thermoplastic matrix with the core-shell particle in an extruder such as a twin screw extruder. The key is to obtain good dispersion of the core-shell particle.

Other means of combining the thermoplastic matrix with the core-shell particle or core-shell composite particle include, but are not limited to 1.) Blending of the thermoplastic polymer matrix with the core-shell particle where both materials are in the colloidal state. This latex blend can be used as is or followed by solid recovery via a method such as spray drying or coagulation 2.) Direct incorporation of the core-shell particle into liquid resin (with the liquid resin before core-shell addition comprising at least a 25% level of matrix monomer) that is then polymerized (such as cell casting of MMA, polymerization of liquid composite resins or an additive manufacturing technique such as stereolithography (SLA)) 3.) Solvent casting of the particles and dissolved matrix polymer 4.) powder-blending followed by melt processing such as but not limited to extrusion, coextrusion, injection molding, compression molding or thermoforming 5.) powder-blending followed by an additive manufacturing technique such as selective laser sintering (SLS).

For thermoset resin, a preferred embodiment is the physical mixing of the core-shell particle or core-shell composite particle into the liquid resin before complete cure has occurred. The thermoset core-shell mixture may then be processed via casting or UV curing or an additive manufacturing technique such as SLA to form a thermoset article or adhesive. The thermoset core-shell mixture may also be processed via techniques such as infusion, resin transfer molding or pultrusion to form a fiber reinforced composite structure. Other methods may include but are not limited to powder blending for example for incorporating the core-shell particle into a solid epoxy coating or followed by an additive manufacturing technique such as SLS.

### Articles

For thermoplastic matrices, articles and plaques for testing are preferably formed by heat processing. Useful heat processing methods include, but are not limited to injection molding, extrusion and coextrusion, film extrusion, blow molding, lamination, extrusion lamination, rotomolding, infusion, pultrusion, compression molding and fusion deposition modeling. For liquid thermoplastic resins, techniques such casting, curing on an adhesive or SLA may be utilized while for fiber reinforced thermoplastic articles, processing techniques such as infusion, resin transfer molding or pultrusion may be utilized. Additive manufacturing techniques such as fusion deposition modeling (FDM) or laser sintering may also be utilized.

For thermoset articles, processes such as casting, curing of an adhesive, infusion, resin transfer molding, wet compression molding, pultrusion, spray-up and lay-up may be utilized to form articles and plaques for testing. Additive manufacturing techniques such as SLA or SLS may be utilized.

Other additives, and the optional pigments and dyes can be dry blended into the composition prior to heat processing into the final article. In the case of some additives, such as the pigment or dye, a masterbatch containing a concentrate could be used.

Multi-layer article are also contemplated by the invention. The composition of the invention may be used on the outer side, inner side or any intermediate layer. The multi-layer article could be two layers, or multiple layers, that could include adhesive and/or tie layers.

Fiber reinforced articles are also contemplated by the invention. Useful fibers may include but are not limited to glass, carbon or natural fibers.

### Properties

The polymeric composition of the invention when processed to form an article or test sample, provides a unique combination of impact resistance, aesthetics and low water haze that are useful in several applications.

In a preferred embodiment, the articles have a high impact resistance. When measured by notched Izod (ASTMD256) the polymeric compositions achieve an impact resistance of > 1.5 ft-lbs/in.

In another preferred embodiment, the articles have a high level of impact but maintain high modulus due to the need to use lower loadings of the highly efficient impact modifier. When measured by notched Izod (ASTMD256) the polymeric compositions achieve an impact resistance of > 1 ft-lbs/in but still maintain a tensile modulus of > 300,000 psi (ASTM D638).

In a preferred embodiment, opaque/ translucent articles of the invention have at least a medium level of impact (Notched Izod as per ASTM 256 of > 0.7 ft-lbs/in) but maintain high gloss even after profile extrusion. The 60 ° gloss after profile extrusion or profile coextrusion of a 250 micron thick part or layer is > 30 as measured by Byk-Gardner micro-gloss meter.

In a preferred embodiment, opaque/ translucent articles of the invention have at least a medium level of impact (Notched Izod as per ASTM 256 of > 0.7 ft-lbs/in), but the water haze of the material is also very low, as indicated by the ΔE Color Value (as measured by CIE L*a*b* on X-Rite Color I7 spectrophotometer) of the test specimen of less than 2.0, and preferably less than 1.0 after being exposed at 70 °C for 24 hours.

In a particularly preferred embodiment, opaque/translucent articles of the invention have at least a medium level of impact (Notched Izod as per ASTM 256 of > 0.7 ft-lbs/in), a high level of gloss (60 ° gloss after profile extrusion or profile coextrusion of a 250 micron thick part or layer is > 45 as measured by Byk-Gardner micro-gloss meter and the water haze of the material is also very low, as indicated by the ΔE Color Value (as measured by CIE L*a*b* on X-Rite Color I7 spectrophotometer) of the test specimen of < 2 after being exposed at 70 °C for 24 hours.

In a preferred embodiment, transparent articles of the invention have at least a medium level of impact (Notched Izod as per ASTM 256 of > 0.7 ft-lbs/in) but maintain high transparency, >90% Total Luminous Transmission (TLT) as measured by ASTMD1003.

In a preferred embodiment, transparent articles of the invention have at least a medium level of impact (Notched Izod as per ASTM 256 of > 0.7 ft-lbs/in) but the water haze of the material is also very low, as indicated by a change in haze of <5 units (as measured according to ASTM D1003) after being immersed in 70°C deionized water for 24 hours and conditioned at room temperature with 50%RH for >24hrs afterwards.

In a particularly preferred embodiment, transparent articles of the invention have at least a medium level of impact (Notched Izod as per ASTM 256 of > 0.7 ft-lbs/in) and high transparency (TLT> 90% as measured by ASTMD1003) and the water haze of the material is also very low, as indicated by a change in haze of <2 units (as measured according to ASTM D1003) after being immersed in 70°C deionized water for 24 hours and conditioned at room temperature with 50%RH for >24hrs afterwards.

Also contemplated by the invention is low temperature haze of polymeric compositions due to the preferred small particle size of the invention. A change in haze of <20% (as measured according to ASTM D1003) is anticipated when temperatures increase from ambient up to 80°C.

### USES

The composition of the invention is useful in forming high impact, excellent aesthetic and low water haze articles for applications including but not limited to building and construction (such as decking, railings, siding, fencing, and window and door profiles); automotive applications (such as exterior trim, interiors, mirror housings, fenders); electronics (such as ear buds, cell phone cases, computer housings); energy applications (such as wind energy) custom sheet applications especially as a capstock; optical applications (conspicuity films for street signage); medical (IV connections such as luers, diagnostic components), sporting goods (such as shoes soles, tennis rackets, golf clubs, skis), infrastructure (such as bridges, rebar), outdoor equipment (such as snow mobiles, recreational vehicles, jet skis) and applications made by any type of additive manufacturing.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

### EXAMPLES:

### Examples 2 and 8 are according to the invention. The remaining examples are non-claimed / comparative examples.

### Test methods:

Specimens for physical and optical testing are all injection molded to 3.18±0.05 mm in thickness with other dimensions specified in the ASTM standards.
A. Tg: The glass transition temperature (Tg), is measured by DSC (differential scanning calorimetry) in accordance with standard ISO 11357-2 (2013) and standard ISO 11357-3 (2013), according to the following protocol:
   1: Equilibrate at 20.00°C
   2: Cool at a rate of 10.00°C/min to -50.00°C
   3: Maintain this temperature for 5.00 min
   4: Heat at a rate of 20.00°C/min to 250.00°C
   5: Maintain this temperature for 5.00 min
   6: Cool at a rate of 10.00°C/min to -50.00°C
   7: Maintain this temperature for 5.00 min
   8: Heat at a rate of 20.00°C/min to 250.00°C
B. Ratio of emulsifier to surface area.
   The ratio of emulsifier to surface area is a calculated value. The volume average article size, and the average number of particles is determined by light scattering on a latex using a NICOMP380 dynamic light scattering instrument. The polymer solids is determine by weighing an aluminum pan, adding a latex polymer and weighing, then evaporating the water in an oven to obtain the polymer solids as a mass percent. The surface area of the particles is calculated, based on the volume average radius, which was determined by light scattering. The amount of emulsifier added to the latex is assumed to all be present on the surface of the particles. The polymer density is obtained by taking the mass of a solid polymer mass, and dividing by the volume. By using the average number of particles, and the volume average particle size, the calculated surface area calculated density and the polymer concentration, and the polymer density, one can calculate the ratio of the emulsifier to surface area.
C. Water haze. Is the measured difference in haze between a sample as injection molded and conditioned at room temperature and humidity (23°C, 50% relative humidity, RH) to the haze in a sample after it is immersed in 70°C deionized water for 24 hours and followed with conditioning at room temperature and 50% RH as measured using BYK HazeGard Plus under ASTM method D1003 for samples with total light transmission higher than 50%. Alternatively, for opaque samples, the difference in final color to initial color (Delta E) can be used instead of (Delta Haze).as described previously.
D. Gloss: The surface gloss was measured at a measuring angle of 60 degrees using a BYK Spectro-Guide.
E. Notched Izod Impact measured according to ASTM D256

Abbreviations used for examples:
MMA = methyl methacrylate
EA = ethyl acrylate
BA = butyl acrylate
MA = methyl acrylate
Sty = styrene
ALMA = allyl methacrylate
GMAA = glacial methacrylic acid
KDDBS = potassium dodecylbenzene sulfonate

### Example 1

This example illustrates the preparation of a multi-stage, sequentially produced polymer of composition.

The ratio of the three stages was 10 // 75 // 15

The composition of the three stages was

| | |
|---|---|
| Stage 1: | 79/20/1 MMA/BA/ALMA |
| Stage 2: | 82/17/1 BA/Sty/ALMA |
| Stage 3: | 100 MMA |

A monomer charge consisting of stage 1 was emulsified in deionized water using KDDBS. The emulsion was heated between 50-70 °C and initiated with a 1:1 weight ratio of tert-butyl hydroperoxide to bruggolite(R) FF7 reducing agent to get a suitable rate of polymerization. The temperature was increased to at least 80 °C and, after nearly complete conversion, potassium carbonate was added to regulate pH for stage 2 and 3. The stage 2 mixture was fed gradually along with a controlled amount of KDDBS to limit the generation of new particles and to maintain latex stability. Potassium persulfate was added concurrently with the stage 2 mixture to control polymerization rate, residual salt content and pH level. Following the addition, the latex was allowed to cure until <1% residual monomer remained. The stage 3 monomer mixture was added gradually with a limited amount of surfactant to control the particle growth. After the addition, the latex was allowed to cure until < 0.1% residual monomer remained. The polymer was isolated by coagulation, freeze-drying, or spray-drying.

### Example 2

This polymer was prepared in a manner similar to Example 1 except that it had different stage ratios:
The ratio of the three stages was 2 // 75 // 23
The composition of the stages was

| | |
|---|---|
| Stage 1: | 8/90/2 MMA/Sty/ALMA |
| Stage 2: | 85/14/1.0 BA/Sty/ALMA |
| Stage 3: | 100 MMA |

### Example 3

This polymer was prepared in a manner similar to Example 1 except that it had different stage ratios:
The ratio of the three stages was 6 // 75 // 19
The composition of the stages was

| | |
|---|---|
| Stage 1: | 8/90/2 MMA/Sty/ALMA |
| Stage 2: | 84/15/1.0 BA/Sty/ALMA |
| Stage 3: | 99/1 MMA/GMAA |

### Example 4

This polymer was prepared in a manner similar to Example 1 except that it had different stage ratios:
The ratio of the three stages was 7 // 75 // 18
The composition of the stages was

| | |
|---|---|
| Stage 1: | 80/10/9.8/0.2 MMA/Sty/BA/ALMA |
| Stage 2: | 84/15/1 BA/Sty/ALMA |
| Stage 3: | 99/1 MMA/BA |

### Examples 5 and 6 (Comparative)

This example illustrates the preparation of a multi-stage, sequentially-produced polymer of the given composition, using the method of the prior art, targeting a radius of 80 nm and 150 nm, respectively.

The ratio of the three stages was 15 // 65 // 20

The composition of the three stages was

| | |
|---|---|
| Stage 1: | 74.8/25/0.2 MMA/EA/ALMA |
| Stage 2: | 83.5/15.5/1.0 BA/Sty/ALMA |
| Stage 3: | 95/5 MMA/EA |

A monomer charge consisting of 34% of Stage 1 was emulsified in water using KDDBS as the emulsifier and using potassium carbonate to control the pH and was polymerized using potassium persulfate at elevated temperatures. The remaining portion of Stage 1 was then added to the preformed polymer emulsion and was polymerized using potassium persulfate at elevated temperatures controlling the amount of soap added to prevent the formation of a significant number of new particles. The Stage 2 monomers were then added and polymerized using potassium persulfate at elevated temperatures controlling the amount of soap added to prevent the formation of a significant number of new particles. The Stage 3 monomers were then polymerized using potassium persulfate at elevated temperatures and again controlling the amount of soap added to prevent the formation of a significant number of new particles. The polymer was isolated by coagulation, freeze-drying, or spray-drying.

The ratio of the three stages was 35 // 45 // 20

The composition of the three stages is

| | |
|---|---|
| Stage 1: | 95.8/0.4/0.2 MMA/EA/ALMA |
| Stage 2: | 80/18/2.0 BA/Sty/ALMA |
| Stage 3: | 96/4 MMA/EA |

### Examples 7-13

The polymers of Examples 1-6 were blended with the listed amount of acrylic copolymer matrix in an extruder.

| Example # | 7 | 8 | 9 | 10 | 11 (Comp) | 12(comp) | 13 (comp) |
|---|---|---|---|---|---|---|---|
| wt% elastomeric impact modifier | 50%E1 | 50%E2 | 40% E3 | 35%E4 | 40%E5 | 40%E6 | 42.5%E6 |
| wt% acrylic copolymer matrix | 50% | 50% | 60% | 60% | 60% | 60% | 52.5% |
| % colorant | 0 | 0 | 0 | 5% | 0 | 0 | 5% |
| Particle radius (+- 10nm) | 60±5 | 120±5 | 55±5 | 85±5 | 80±5 | 150±5 | 150±5 |
| Avg surfactant mass per particle surface (g/m²) | 6.7 x 10^{- 5} | 8.5 x 10⁻⁵ | 9.9x10⁻⁵ | 1.6 x 10⁻⁴ | 1.6 x 10⁻⁴ | 1.8 x 10⁻⁴ | 1.8 x 10⁻⁴ |
| Total Luminous Transmission (TLT) % | 91.5 | 83.5 | 83 | 0 | 92 | 92 | 0 |
| Haze | 1.0 | 6.0 | 4.6 | n/a | 1.0 | 1.9 | n/a |
| Haze after immersion at 70°C for 24hr | 1.9 | n/a | n/a | n/a | 10 | 16 | n/a |
| Notched izod impact resistance (ft-lb/in) | 1.87 | 2.65 | 1.19 | 1.1 | 0.70 | 1.1 | 1.2 |
| Young's Modulus | 215kpsi | n/a | 303kpsi | n/a | 355kpsi | 305kpsi | 250kpsi |
| Delta E after immersion at 70°C for 24hr | n/a | n/a | n/a | 0.9 | n/a | n/a | 2.0 |

Examples 7-13 were molded into 1/8" plaques and 1/8" x 0.5" x 2.5" Izod bars. The energy per length of notch was measured on a ceast Izod testing machine according to ASTM D256.

This table clearly shows the advantages of having an optimized elastomeric polymer dispersed in an acrylic copolymer matrix containing lower levels of surfactant. Example 7 exhibits 2.67 times higher impact resistance and 8.1 units less haze after immersion at 70°C for 24 hours than Example 11; meanwhile the optical properties such as TLT and haze are maintained. It also illustrates the advantages of a mixed initiator system during core-shell synthesis. Example 8 demonstrates that an impact resistance of 2.65 ft-lb/in can be achieved with only a minor compromise to optical properties. Example 9 shows that a tensile modulus of more than 300,000 psi can be achieved while having an impact resistance of 1.19 ft-lb/in.

### Example 14-15 (Profile extrusion)

Examples 14 and Example 15 consist of the materials from Example 10 and Example 13, respectively, co-extruded over PVC with profile extrusion where the cap layer thickness is 200-250 microns. The PVC thickness was 1160-1270 microns. The GVHIT impact strength of the composite is then tested as per ASTM-D4226-00.

| | GVHIT | Gloss at 60° |
|---|---|---|
| Example 14 | 1.3 in-lb./mil | 45±3 |
| Example 15 | 1.1 in-lb./mil | 15±3 |

The advantages of materials like Example 14 over more traditional acrylics like Example 15 is readily apparent. Example 15 does not meet the gloss requirements enabled by the invention.

## Claims

1. A core-shell particle having a radius of 100 nm or less, consisting of:
a. 0.5 to 5 weight percent of a hard core polymeric stage with a T_{g} > 0°C,
b. 10 to 80 weight percent, preferably 55 to 80 weight percent of an inner polymeric shell with a T_{g} < 0 °C,
c. 5-50 weight percent, preferably 10 to 20 weight percent of an outer polymeric shell with a T_{g} > 0°C,
wherein the radius of the core-shell particle and T_{g} are determined as specified in the description.

2. The core-shell particle of claim 1, wherein said hard core polymeric stage comprises at least 50 weight percent of monomer units selected from the group consisting of methacrylate ester units, acrylate ester units, styrenic units, and mixtures thereof.

3. The core-shell particle of claim 1 or 2, wherein the inner polymeric shell comprises at least 50 weight percent of monomer units selected from the group consisting of alkyl acrylates, dienes, styrenics, and mixtures thereof.

4. The core-shell particle of any one of claims 1 to 3, wherein the outer polymeric shell comprises at least 50 weight percent of monomer units selected from the group consisting of methacrylate ester units, acrylate ester units, styrenic units, and mixtures thereof.

5. A polymeric impact modified composition comprising:
a.) 30- 99 weight percent of at least one polymeric resin as the matrix, and
b) 1-70 weight percent, preferably 10-60 weight percent, more preferably 20-50 weight percent, of core-shell particles as claimed in any one of claims 1 to 4.

6. An article comprising the impact modified composition of claim 5.

7. The article of claim 6, wherein said article is a multi-layer article, wherein at least one layer comprises the impact modified composition claim 5.

## Patentansprüche

1. Kern-Schale-Partikel mit einem Radius von 100 nm oder weniger, bestehend aus:
a. 0,5 bis 5 Gewichtsprozent einer harten Kernpolymerphase mit einer T_{g} > 0 °C,
b. 10 bis 80 Gewichtsprozent, vorzugsweise 55 bis 80 Gewichtsprozent einer inneren Polymerschale mit einer T_{g} < 0 °C,
c. 5-50 Gewichtsprozent, vorzugsweise 10 bis 20 Gewichtsprozent einer äußeren Polymerschale mit einer T_{g} > 0 °C,
wobei der Radius des Kern-Schale-Partikels und T_{g} wie in der Beschreibung angegeben bestimmt werden.

2. Kern-Schale-Partikel nach Anspruch 1, wobei die harte Kernpolymerphase mindestens 50 Gewichtsprozent Monomereinheiten umfasst, die aus der Gruppe ausgewählt sind, die aus Methacrylatestereinheiten, Acrylatestereinheiten, Styroleinheiten und Mischungen davon besteht.

3. Kern-Schale-Partikel nach Anspruch 1 oder 2, wobei die innere Polymerschale mindestens 50 Gewichtsprozent Monomereinheiten umfasst, die aus der Gruppe ausgewählt sind, die aus Alkylacrylaten, Dienen, Styrolen und Mischungen davon besteht.

4. Kern-Schale-Partikel nach einem der Ansprüche 1 bis 3, wobei die äußere Polymerschale mindestens 50 Gewichtsprozent Monomereinheiten umfasst, die aus der Gruppe ausgewählt sind, die aus Methacrylatestereinheiten, Acrylatestereinheiten, Styroleinheiten und Mischungen davon besteht.

5. Polymere schlagzähmodifizierte Zusammensetzung, umfassend:
a.) 30-99 Gewichtsprozent mindestens eines Polymerharzes als die Matrix und
b) 1-70 Gewichtsprozent, vorzugsweise 10-60 Gewichtsprozent, noch bevorzugter 20-50 Gewichtsprozent Kern-Schale-Partikel nach einem der Ansprüche 1 bis 4.

6. Gegenstand, der die schlagzähmodifizierte Zusammensetzung nach Anspruch 5 umfasst.

7. Gegenstand nach Anspruch 6, wobei der Gegenstand ein mehrschichtiger Gegenstand ist, wobei mindestens eine Schicht die schlagzähmodifizierte Zusammensetzung nach Anspruch 5 umfasst.

## Revendications

1. Particule à structure cœur-coque présentant un rayon inférieur ou égal à 100 nm, constituée de :
a. 0,5 à 5 % en poids d'une phase polymère de cœur dur présentant une T_{g} > 0 °C,
b. 10 à 80 % en poids, de préférence 55 à 80 % en poids, d'une coque polymère intérieure présentant une T_{g} < 0 °C,
c. 5 à 50 % en poids, de préférence 10 à 20 % en poids, d'une coque polymère extérieure présentant une T_{g} > 0 °C ;
le rayon de la particule à structure cœur-coque et la T_{g} étant déterminés de la manière indiquée dans la description.

2. Particule à structure cœur-coque selon la revendication 1, dans laquelle la phase polymère de cœur dur comprend au moins 50 % en poids d'unités monomères choisies dans le groupe constitué par les unités ester de méthacrylate, les unités ester d'acrylate, les unités styrène et les mélanges de celles-ci.

3. Particule à structure cœur-coque selon la revendication 1 ou 2, dans laquelle la coque polymère intérieure comprend au moins 50 % en poids d'unités monomères choisies dans le groupe constitué par les acrylates d'alkyle, les diènes, les styrènes et les mélanges de ceux-ci.

4. Particule à structure cœur-coque selon l'une quelconque des revendications 1 à 3, dans laquelle la coque polymère extérieure comprend au moins 50 % en poids d'unités monomères choisies dans le groupe constitué par les unités ester de méthacrylate, les unités ester d'acrylate, les unités styrène et les mélanges de celles-ci.

5. Composition polymère modifiée antichoc comprenant :
a.) 30 à 99 % en poids d'au moins une résine polymère servant de matrice, et
b.) 1 à 70 % en poids, de préférence 10 à 60 % en poids, plus préférablement 20 à 50 % en poids, de particules à structure cœur-coque selon l'une quelconque des revendications 1 à 4.

6. Article comprenant la composition modifiée antichoc selon la revendication 5.

7. Article selon la revendication 6, ledit article étant un article multicouche, au moins une couche comprenant la composition modifiée antichoc selon la revendication 5.
